# EUROPEAN PATENT APPLICATION

(11) **EP 1 571 852 A2**
(43) Date of publication of application: **07.09.2005**
(21) Application number: 05004424.7
(22) Date of filing: 01.03.2005
(51) Int. Cl.: H04N 7/46, H04N 7/26, G06T 3/40, H04N 7/30, H04N 7/28

(54) **Image coding and decoding with spatial subsampling**

(30) Priority: 02.03.2004 KR 2004013940
(71) Applicant: LG ELECTRONICS INC., Seoul (KR)
(72) Inventor: Lee, Jin Soo, Songpa-gu Seoul (KR); Kim, Min Sub, Seocho-gu Seoul (KR)
(74) Representative: Rupprecht, Kay

(57) **Abstract**

There is provided and image coding an decoding method capable of providing a high compression rate and a high-speed coding. The image coding method includes the steps of: dividing an input image into a plurality of images through a sub-sampling; calculating a difference value between a previous pixel and a first divided image of the divided images, and calculating difference values between the first divided image and each of the remaining divided images; and coding the calculated difference values. Dictionary based coding, variable length coding or a combination thereof are used.

## Description

### BACKGROUND OF THE INVENTION

### Field of the Invention

The present invention relates to an image processing system, and more particularly, to an image coding and decoding method capable of providing high compression rate and high-speed decoding.

### Description of the Related Art

As a screen of mobile communication terminal becomes larger, graphic tends to be enhanced more or more. A size of the mobile communication terminal becomes smaller and a resolution makes a progress toward high quality. Thus, the number of expressible colors per pixel is also increasing.

Liquid crystal display (LCD) having 16-bit colors (65,000 colors) and high resolution of QVGA (320x240) has been recently introduced. A user interface (UI) has been developed from a simple image to three-dimensional image or animation. As the expansion of memory space to store UI images is demanded increasingly, researches on CODEC for UI picture have been made actively.

A primary requirement of the CODEC for UI picture is a fast decoding speed. When a user presses a button, most of UI pictures must be displayed immediately so that the user cannot feel a delay due to an allocation of an additional decoding time. An image is generally decoded and displayed within 100 ms. Since most terminals control the UI through a low-performance CUP such as ARM7 and ARM8, they cannot use CODEC, such as JPEG, having a large amount of calculation. Accordingly, BITMAP that is an original data is used. Since such a BITMAP is uncompressed, it occupies a wide memory space.

In order to solve that problem, a method of applying a dictionary based coding such as LZW has been proposed. Although an image can be decoded at high speed through the dictionary based coding, a compression rate is reduced to 1/2 to 1/5 of the original data. Accordingly, the CODEC for UI picture with a high-speed decoding and a low compression rate is widely used.

The mobile communication terminals often use a natural image (e.g., photograph) as well as a simple artificial image as a background.

Although the CODEC using the dictionary based coding has somewhat compression performance with respect to the simple artificial image, the natural image is compressed only to 1/2.

### SUMMARY OF THE INVENTION

Accordingly, the present invention is directed to an image coding and decoding method that substantially obviates one or more problems due to limitations and disadvantages of the related art.

An object of the present invention is to provide an image coding and decoding method, in which an image can be decoded at high speed using a sub-sampling and a dictionary based coding and a natural image can also be coded to a high compression rate.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, an image coding method includes the steps of: dividing an input image into a plurality of images through a sub-sampling; calculating a difference value between a previous pixel and a first divided image of the divided images, and calculating difference values between the first divided image and each of the remaining divided images; and coding the calculated difference values.

In another aspect of the present invention, there is provided an image decoding method, including the steps of: decoding a plurality of coded divided images; calculating a sum of a decoded first divided image and a previous pixel, and calculating a sum of the first divided image and each of the remaining divided images; and merging the calculated divided images to generate an original image.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a flowchart illustrating an image coding method according to a preferred embodiment of the present invention;

Fig. 2 is an exemplary view of an original image according to a preferred embodiment of the present invention;

Figs. 3A to 3D are exemplary views of images divided from the original image of Fig. 2 through a sub-sampling;

Fig. 4A to 4D are exemplary views of real images with respect to the divided images of Fig. 3;

Fig. 5 is a flowchart illustrating an image decoding method according to a preferred embodiment of the present invention;

Fig. 6 is a flowchart illustrating an image coding method according to another preferred embodiment of the present invention; and

Fig. 7 is a flowchart illustrating an image decoding method according to a preferred embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

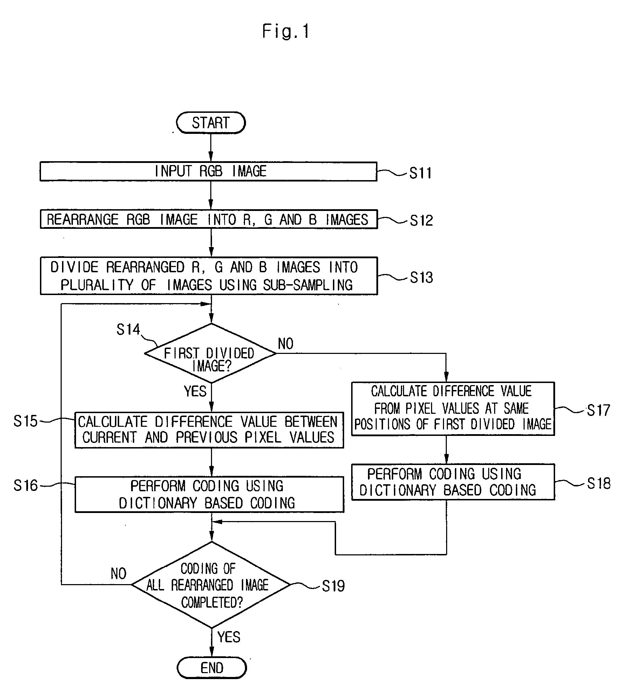

Fig. 1 is a flowchart illustrating an image coding method according to a preferred embodiment of the present invention

Referring to Fig. 1, RGB image is inputted (S11). The RGB image contains R pixel value, G pixel value, and G pixel value.

The inputted RGB image is rearranged into R, G and B images (S12). Accordingly, the R image contains only R pixel values and the G image contains only G pixel values. Likewise, the B image contains only B pixel values. Each size of the R, G and B images are identical to that of the RGB image.

The rearranged R, G and B images are respectively divided into a plurality of images by using a sub-sampling (S13).

In this embodiment, each of the R, G and B images is divided into four images. That is, the R image is divided into four images, the G image is divided into four images, and the B image is also divided into four images. Accordingly, the size of each divided image becomes smaller than the R, G, and B images.

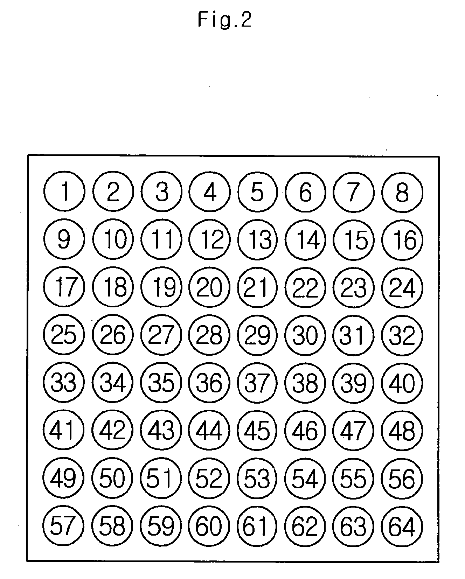

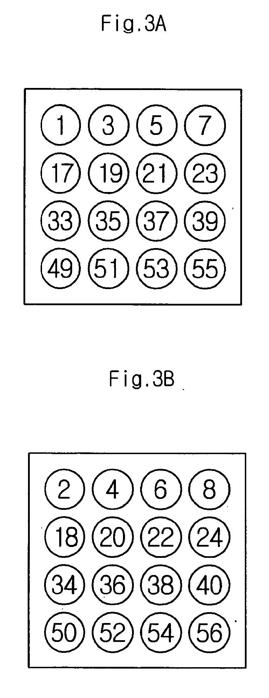

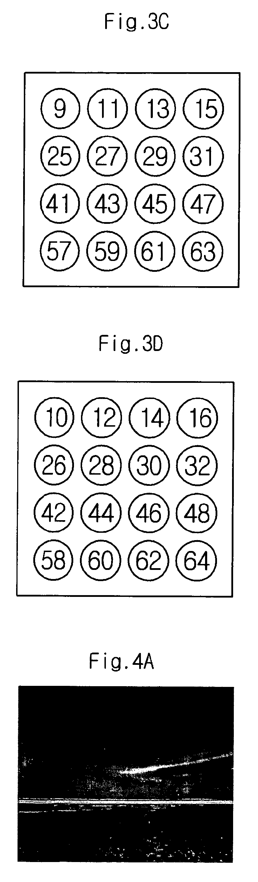

The process of dividing the image will be described with reference to Figs. 2 and 3A to 3D.

Fig. 2 is an exemplary view of an original image according to a preferred embodiment of the present invention, and Figs. 3A to 3D are exemplary views of images divided from the original image of Fig. 2 through a sub-sampling.

In Fig. 2, one of R, G and B images is illustrated. For convenience of explanation, it is assumed that the image illustrated in Fig. 2 is the R image. As illustrated in Fig. 2, the R image can consist of 64 pixels. Numbers are assigned to the respective pixels so as to distinguish them.

As illustrated in Figs. 3A to 3D, the R image can be divided into four images through a sub-sampling.

Figs. 3A to 3D illustrate a first divided image, a second divided image, a third divided image, and a fourth divided image, respectively.

For this, the R image of Fig. 2 is arranged into the divided images with reference to four pixels (for example, pixels 1, 2, 9 and 10).

For example, in the R image of Fig. 2, the pixel 1 is arranged into the first divided image of Fig. 3A, the pixel 2 is arranged into the second divided image of Fig. 3B, the pixel 9 is arranged into the third divided image of Fig. 3C, and the pixel 10 is arranged into the fourth divided image of Fig. 3D.

Also, the R image of Fig. 2 is arranged into the divided images with reference to next four pixels (for example, pixels 3, 4, 11 and 12).

For example, in the R image of Fig. 2, the pixel 3 is arranged into the first divided image of Fig. 3A, the pixel 4 is arranged into the second divided image of Fig. 3B, the pixel 11 is arranged into the third divided image of Fig. 3C, and the pixel 12 is arranged into the fourth divided image of Fig. 3D.

In this manner, the R image of Fig. 2 is arranged into the divided images of Figs. 3A to 3D by the sub-sampling. Although the image is arranged into the four divided images, the image can be, if necessary, divided into eight divided images.

The first divided image consists of the pixels disposed at intersections of odd rows and odd columns in the R image of Fig. 2, the second divided image consists of the pixels disposed at intersections of odd rows and even columns in the R image of Fig. 2, the third divided image consists of the pixels disposed at intersections of even rows and odd columns in the R image of Fig. 2, and the fourth divided image consists of the pixels disposed at intersections of even rows and even columns in the R pixels of Fig. 2.

Accordingly, the divided image is reduced by 1/2 of the R image in row and column, and the number of the pixels is reduced by 1/4. That is, the divided image consists of 64 pixels, while the R image consists of 64 pixels.

In addition to the R image, the G and B images are also divided into a plurality of images.

When the division of the image is completed, a decoding is performed on the first divided image.

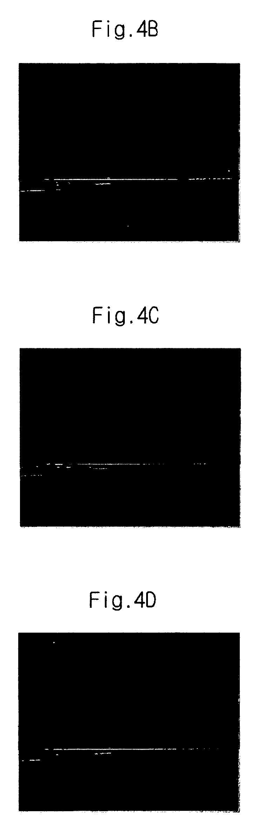

That is, it is checked whether the divided image is the first divided image (S14). If the divided image is the first divided image, a difference between a current pixel value and a previous pixel value is calculated (S15). Here, a real image of the first divided image can be displayed like Fig. 4A.

Since a pixel value before the first pixel value (e.g., the value of the pixel 1) does not exist, the first pixel value is maintained as a first difference value. A second difference value between a second pixel value (e.g., a value of the pixel 3) and the first pixel value is calculated and the resulting value is disposed next to the first pixel value (the first difference value). Also, a third difference between a third pixel value (e.g., a value of the pixel 5) and the second pixel value is calculated and the resulting value is disposed next to the second difference value. In this manner, the difference values for the first divided image are calculated.

After the difference values for the first divided image are all calculated, a coding is performed using the dictionary based coding (S16).

For example, if current five difference values are identical to one another; the five difference values exist previously; and a distance from the current five difference values to the previous identical difference values is 12 pixels, the image is coded to (12, 5). That is, it means that the current five difference values are identical to sequential five pixels from the pixel values disposed at a distance of 12 pixels. Accordingly, the current five difference values can be decoded using (12, 5).

After the coding of the first divided image is finished, the second to fourth divided images are coded.

The coding of the second to fourth divided images is performed by the same processes.

In the case of the second divided image, difference values from the pixel values at the same positions of the first divided image are calculated (S17).

Since the size of the first divided image is equal to that of the second divided image, the pixels contained in the first divided image correspond to those contained in the second divided image.

Accordingly, the difference values between the pixels disposed at the same positions of the first and second divided images are calculated.

Here, among two pixels of the row and two pixels of the column, the first pixel is arranged into the first divided image, and the pixels adjacent to the first pixel are respectively arranged into the second to fourth divided images. Thus, a similarity between the first divided image and the second to fourth divided images is very high.

Accordingly, the difference value between the first divided image and the second divided image can be almost close to zero.

Based on the difference value with respect to the second divided image, the coding is performed using the dictionary based coding (S18).

Since the similarity between the first divided image and the second to fourth divided images is very high, higher compression rate is possible.

The third and fourth divided images are coded through steps S17 and S18.

Here, the difference values for the second to fourth divided images can be expressed as shown in Figs. 4B to 4D. As can be seen from Figs. 4B to 4D, the difference values for the second to fourth divided images are almost close to zero. Thus, the images are composed of almost meaningless images. Even though these images are removed through the coding, there is no influence when the corresponding image is decoded later.

After all the divided images of the R image is coded, the G and B images are coded through steps S13 to S18.

That is, it is checked whether or not the rearranged images (for example, the R, G and B images) are coded. If an uncompressed rearranged image exists, the coding is continued. If all the rearranged images are coded, the process is ended (S19).

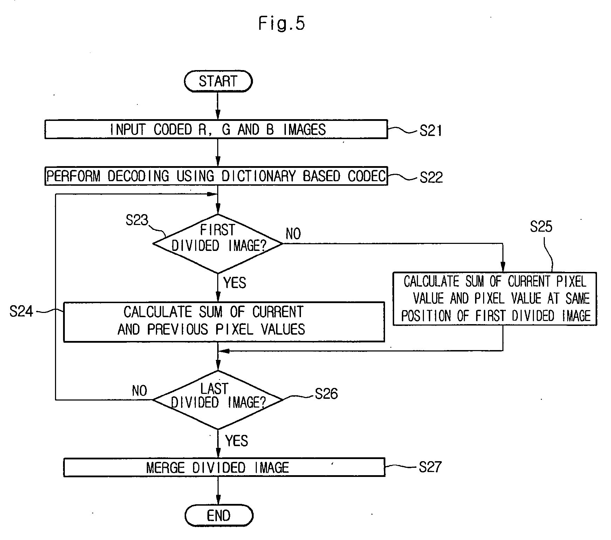

Fig. 5 is a flowchart illustrating an image decoding method according to a preferred embodiment of the present invention.

Referring to Fig. 5, each divided image of the R, G and B images is decoded using the dictionary based coding (S22).

For example, the four divided images of the R image, the four divided images of the G image, and the four divided images of the B image are respectively decoded using the dictionary based coding.

Since the four divided images for each of the R, G and B images are coded in Fig. 1, the coded four divided images for each of them are decoded.

The decoding of the four divided images contained in the R image will now be described. It is noted that following processes are also applied to the G and B images.

It is checked whether or not the decoded divided image is the first divided image (S23). In the case of the first divided image, a sum of a current pixel value and a previous pixel value is calculated (S24).

In the case of the first divided image, since a pixel value before a first pixel value does not exist, a decoded first pixel value is maintained as it is. A second sum of a second pixel value and the first pixel value is calculated and disposed next to the first pixel value. A third sum of a third pixel value and the second sum is calculated and disposed next to the second pixel value. In this manner, the sums between the respective pixel values with respect to the first divided image are calculated.

After the sums for the first divided image are all calculated, sums for the second divided image are calculated. Then, sums for the third and fourth divided images are calculated.

That is, in the case of the second divided image, a sum of a current pixel value and a pixel value at the same position of the first divided image is calculated (S25). This process is performed on all pixel values of the second divided image.

Then, the step S25 is performed on the third and fourth divided images.

It is checked whether or not the calculation of the sums with respect to all divided images of the R image is finished (S26). If not, the steps S23 and S25 are performed. If the calculation of the sums with respect to all divided images is finished, the process proceeds to a next step.

If the calculation of the sums with respect to all divided images is finished, the four divided images are merged to generate the R image (S27).

The G and B images are also generated through the above-described processes.

Accordingly, the generated RGB image is displayed on a screen.

If the generated image is not RGB image but YCbCr image, a process of converting the YCbCr image into the RGB image may be further included.

Although the coding and the decoding are respectively achieved by the dictionary based coding and the dictionary based decoding, they can also be coded by a variable length coding (VLC) and can be decoded by a variable length decoding (VLD).

That is, according to the present invention, the image can be coded by the dictionary based coding, the VLC or combination thereof and can be decoded by the dictionary based decoding, the VLD or combination thereof.

The above description has been made about a lossless compression method. That is, the coding and decoding methods of Figs. 1 and 5 do not perform a quantization. According to the lossless coding and decoding methods, the image can be decoded into the original image without loss. However, a compression rate is lowered as much because the lossless coding and decoding methods do not perform the quantization.

A method for increasing a compression ratio through a lossy compression will be described below.

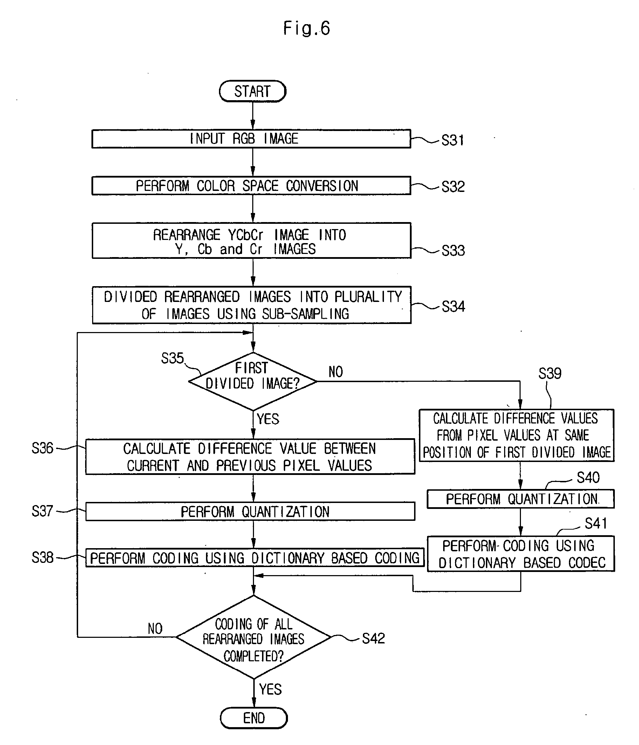

Fig. 6 is a flowchart illustrating an image coding method according to another preferred embodiment of the present invention.

Referring to Fig. 6, RGB image is inputted (S31). A color space conversion from the RGB image to YCbCr image is performed (S32). Since the color space conversion is well known, a detailed description thereof will be omitted. In the YCbCr image, one Y value (brightness value) per pixel is expressed, while one Cb value and one Cr value (chrominance values) per four pixels consisting two pixels of a row and two pixels of a column are expressed.

Accordingly, the number of pixel values of the Y image is identical to that of the RGB image, while the number of pixel values of the Cb image and the Cr image is 1/4 time of the RGB image. Accordingly, each size of the Cb image and the Cr image is reduced to 1/4 of the RGB image, thereby enhancing a compression rate as much. Since the Cb image and the Cr image are insensitive to human eyes, human cannot almost perceive them even when they are coded and decoded.

The YCbCr image is rearranged into Y, Cb and Cr images (S33) and each of them is divided into a plurality of images through a sub-sampling (S34). In this embodiment, the Y, Cb and Cr images are respectively divided into four images.

First, it is checked whether or not an input image is the first divided image of the Y image (S35). If the first divided image of the Y image is inputted, difference values between current pixels and previous pixels are calculated and a quantization is performed (S36, S37).

Then, the quantized first divided image is coded using the dictionary based coding (S38).

Meanwhile, if the input image is not the first divided image of the Y image, that is, if the input image is the second, third or fourth divided image, difference values from pixel values at the same positions of the first divided image are calculated and a quantization is performed (S39, S40).

The quantized second to fourth divided images are coded using the dictionary based coding (S41).

It is checked whether or not all of the rearranged images (Y, Cb and Cr images) are coded (S42). If non-coded image exists, the divided images of the Cb and Cb images are coded through the steps S35 to S41.

If the rearranged images are all coded, the coding is finished.

Like this, the compression rate can be more enhanced by further performing the color space conversion and the quantization.

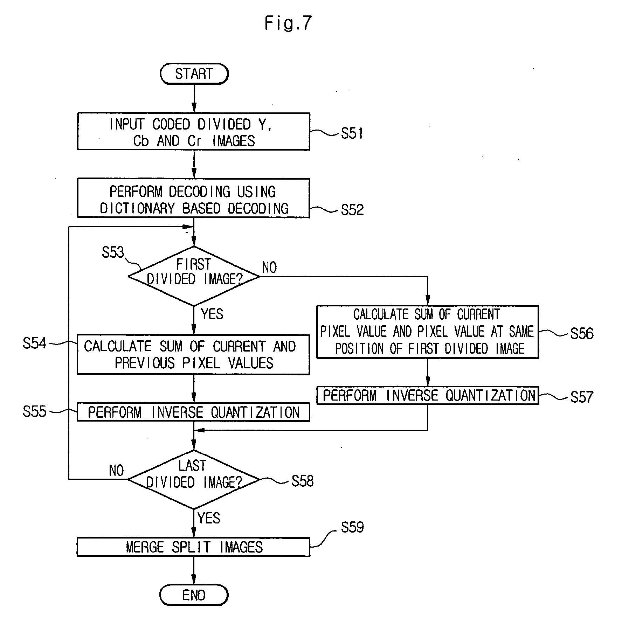

Fig. 7 is a flowchart illustrating an image decoding method according to another preferred embodiment of the present invention.

Referring to Fig. 7, the coded Y, G and B divided images are inputted (S51).

Then, the coded Y, G and B divided images are decoded using the dictionary based decoding (S52).

It is checked whether or not an input image is the first divided image of the Y image (S53). If the first divided image of the Y image is inputted, sum of a current pixel value and a previous pixel value is calculated (S54).

In the case of the first divided image, since a pixel value before a first pixel value does not exist, a decoded first pixel value is maintained as it is. A second sum of a second pixel value and the first pixel value is calculated and disposed next to the first pixel value. A third sum of a third pixel value and the second sum is calculated and disposed next to the second pixel value. In this manner, the sums between the respective pixel values with respect to the first divided image are calculated.

An inverse quantization is performed on the divided images (S55).

After the sums for the first divided image are all calculated, sums for the second divided image are calculated. Then, sums for the third and fourth divided images are calculated.

That is, in the case of the second divided image, a sum of a current pixel value and a pixel value at the same position of the first divided image is calculated (S56). This process is performed on all pixel values of the second divided image.

Then, an inverse quantization is performed on the divided images (S57).

If the steps 56 and S57 are finished with respect to the second divided image, the steps S56 and S57 are repeated for the third and fourth divided images.

It is checked whether or not the quantization with respect to all divided images of the Y image is finished (S58). If not, the steps S53, S56 and S57 are performed. If the quantization with respect to all divided images of the Y image is finished, the process proceeds to a next step.

If the quantization with respect to all divided images is finished, the four divided images are merged to generate the Y image (S59).

The G and B images are also generated through the above-described processes. In this manner, the color space conversion from the YCbCr image to the RGB image is performed, and the RGB image is displayed on a screen.

Although the coding and the decoding are respectively achieved by the dictionary based coding and the dictionary based decoding, they can also be coded by the variable length coding (VLC) and can be decoded by the variable length decoding (VLD).

That is, according to the present invention, the image can be coded by the dictionary based coding, the VLC or combination thereof and can be decoded by the dictionary based decoding, the VLD or combination thereof.

In this manner, the present invention can enhance the compression rate by further performing the color space conversion and the quantization.

Further, using the sub-sampling and the dictionary based coding, the image can be decoded at high speed and the natural image can also be coded at high compression rate.

It will be apparent to those skilled in the art that various modifications and variations can be made in the present invention. Thus, it is intended that the present invention covers the modifications and variations of this invention provided they come within the scope of the appended claims and their equivalents.

## Claims

1. An image coding method comprising the steps of:
dividing an input image into a plurality of images through a sub-sampling;
calculating a difference value between a previous pixel and a first divided image of the divided images, and calculating difference values between the first divided image and each of the remaining divided images; and
coding the calculated difference values.

2. The image coding method according to claim 1, wherein the plurality of divided images include:
a first divided image consisting of pixels disposed at intersections of odd rows and odd columns in the input image;
a second divided image consisting of pixels disposed at intersections of the odd rows and even columns in the input image;
a third divided image consisting of pixels disposed at intersections of even rows and the odd columns in the input image; and
a fourth divided image consisting of pixels disposed at intersections of the even rows and the even columns in the input image.

3. The image coding method according to claim 1, wherein the plurality of divided images are separated depending on color components of the input image.

4. The image coding method according to claim 1, wherein the coding is performed using any one of a dictionary based coding, a variable length coding (VLC) and a combination thereof.

5. The image coding method according to claim 1, wherein if the input image is RGB image, a color space conversion from the RGB image to YCbCr image is performed.

6. The image coding method according to claim 1, further comprising the step of performing a quantization of the calculated difference values before the calculated difference values are coded.

7. An image decoding method comprising the steps of:
decoding a plurality of coded divided images;
calculating a sum of a decoded first divided image and a previous pixel of the decoded divided images, and calculating a sum of the first divided image and each of the remaining divided images; and
merging the calculated divided images to generate an original image.

8. The image decoding method according to claim 7, wherein the decoding is performed using any one of a dictionary based decoding, a variable length decoding (VLD) and a combination thereof.

9. The image decoding method according to claim 7, wherein if the input image is YCbCr image, a color space conversion from the YCbCr image to RGB image is performed.

10. The image decoding method according to claim 7, further comprising the step of performing an inverse quantization of the calculated divided images before the calculated divided images are merged.
